# EUROPÄISCHE PATENTSCHRIFT

(11) **EP 0 318 907 B1**
(45) Veröffentlichungstag und Bekanntmachung des Hinweises auf die Patenterteilung: **10.02.1993**
(21) Anmeldenummer: 88119859.2
(22) Anmeldetag: 29.11.1988
(51) Int. Cl.: F24H 1/22

(54) **Brennerbetriebener Wasserheizer**
Fired water heater
Réchauffeur d'eau à brûleur

(30) Priorität: 03.12.1987 AT 3183/87
(43) Veröffentlichungstag der Anmeldung: 07.06.1989
(73) Patentinhaber: Joh. Vaillant GmbH u. Co., 42810 Remscheid (DE); n.v. Vaillant s.a., 1620 Drogenbos (BE); VAILLANT S.A.R.L, 94537 Rungis Cedex (FR); VAILLANT Ges.m.b.H, 1233 Wien (AT); Vaillant Ltd., Rochester Kent ME2 4EZ (GB); Vaillant-Schonewelle B.V., 1100 DT Amsterdam (NL); Vaillant GmbH, 8953 Dietikon 1 (CH)
(72) Erfinder: Tenhumberg, Jürgen, Dr., D-5608 Radevormwald (DE)
(74) Vertreter: Heim, Johann-Ludwig, Dipl.-Ing.

(56) Entgegenhaltungen:
- DE-A- 3 014 180
- DE-B- 1 202 426
- DE-C- 830 988
- DE-U- 8 324 969
- FR-A- 1 131 694

## Beschreibung

Die Erfindung betrifft einen brennerbetriebenen Wasserheizer mit einer an die Brennkammer anschließenden länglichen, von einem wasserführenden Raum umgebenen Abgasführung, wobei der wasserführende Raum von der Abgasführung durch einen aus keramischen Material bestehenden Wärmetauschkörper getrennt ist.

Ein derartiger Wasserheizer in der Bauform als Zentralheizungskessel mit einem Sturzbrenner ist aus dem DE-GM 83 24 969 bekannt. Als keramische Wärmetauschkörper sind mehrere den Heizgaszug bildende Keramikrohre vorgesehen, welche in den Zwischenräumen wasserdurchflossen sind und zwischen zwei entsprechend durchbohrten Keramikplatten angeordnet sind. Nachteilig dabei ist der komplizierte mehrteilige Aufbau, insbesondere im Hinblick auf die notwendigerweise wasserdichte Paßgenauigkeit zwischen den Rohren und den Platten. Erschwerend kommt hinzu, daß sich keramisches Material nur mit hohem Aufwand ausformen läßt und auch daher die Mehrteiligkeit nachteilig ist.

Aufgabe der Erfindung ist es, einen besonders einfach gestalteten und kompakten, aus robusten Bestandteilen zusammensetzbaren Wasserheizer zu schaffen, der sich durch eine hohe Wärmetauschfähigkeit, geringe Korrosionsanfälligkeit und sehr niedrige Herstellungskosten auszeichnet.

Erfindungsgemäß wird diese Aufgabe dadurch gelöst, daß der keramische Wärmetauschkörper die Abgasführung rohrförmig umschließt, wobei der wasserführende Raum entweder als Ringraum, der an seiner Außenseite von einer metallischen, über Dichtungen mit dem Wärmetauschkörper verbundenen Wandung begrenzt ist, oder durch den Wärmetauschkörper durchsetzende, vorzugsweise achsparallele Kanäle ausgebildet ist.

Keramische Bauteile bekannter Wasserheizer konnten sich bisher in der Praxis nur wenig durchsetzen, weil sie zu kompliziert gestaltet und deshalb schwierig und Kostspielig anzufertigen waren. Demgegenüber ist der keramische Wärmetauschkörper des erfindungsgemäßen Wasserheizers geometrisch überaus einfach gestaltet und kann demzufolge als Sinterstück oder Strangpreßprofil hergestellt werden.

Die rohrförmige Grundform des Wärmetauschkörpers erschließt vorschiedene Möglichkeiten einer weiteren Ausgestaltung.

Zur Verbesserung des Wärmetausches ist es von Vorteil, wenn der rohrförmige Wärmetauschkörper zumindest an seiner dem abgasführenden Raum zugewendeten Innenseite eine den Wärmetausch begünstigende Profilierung, zum Beispiel einwärtsragende Rippen oder dergleichen Fortsätze, aufweist.

Zur Verbesserung der Wärmetauschfähigkeit kann ferner anstelle einer solchen Profilierung oder zusätzlich zu ihr im abgasführenden Raum ein den Wärmetausch begünstigender Einbau, zum Beispiel eine Metallwendel, vorgesehen werden.

Zweckmäßigerweise werden die wasserführenden Bereiche des Wasserheizers durch eine isolierende Ummantelung vor Wärmeverlusten zu bewahren sein.

Bei einem Wasserheizer mit einem Sturzbrenner und einer Abgasführung, von der unterhalb des der Abgasführung dienenden Raumes eine Kondensatabflußleitung ausgeht, ist die Abgasführung bevorzugt in der Dichtverbindung zwischen der metallischen Wandung und der Außenseite des Wärmetauschkörpers angesetzt.

Zwei Ausführungsbeispiele erfindungsgemäßer Wasserheizer sind in den beiden Zeichnungsfiguren 1 und 4 veranschaulicht. Im einzelnen zeigen
- Fig.1: im Axialschnitt eine erste Ausführungsform des Wasserheizers,
- Fig. 2 und 3: stellen fakultative Ausführungsformen im Querschnitt durch den keramischen Kern solcher Wasserheizer dar und
- Fig.4: zeigt wieder im Axialschnitt eine zweite Ausführungsform.

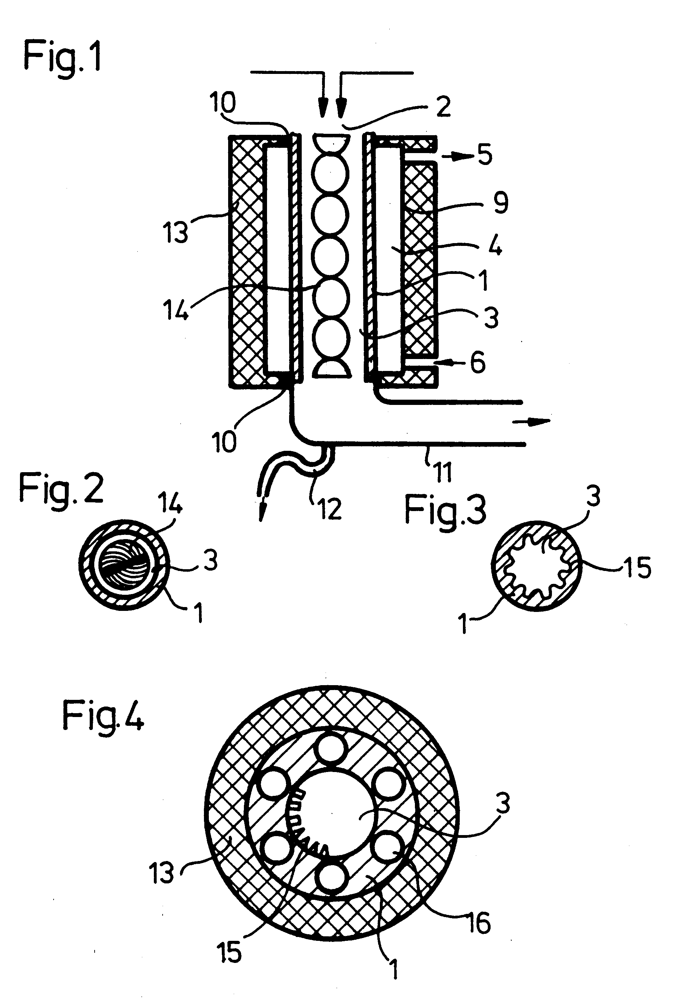

Gemäß Fig.1 trennt der rohrförmige keramische Wärmetauschkörper 1 den zentralen, vom Abgas eines Sturzbrenners 2 durchströmten zylindrischen Raum 3 von dem wasserführenden Ringraum 4, dem ein Vorlauf 5 und ein Rücklauf 6 für das zu beheizende Wasser angeschlossen sind. Dem Sturzbrenner 2 wird über Leitungen 7 und 8 Brennstoff und Verbrennungsluft zugeführt; diese Komponenten eines Brennstoff-Luft-Gemisches können in einer nicht dargestellten Mischkammer miteinander vermischt werden.

Eine Metallwand 9 umschließt und begrenzt den wasserführenden Ringraum 4 wasserdicht und ist in den Dichtungen 10 mit dem keramischen Körper 1 wasserdicht verbunden. In diesen Dichtverbindungen 10 setzt eine metallische Abgasführung 11 an, der unterhalb des Wasserheizers eine Kondensatabflußleitung 12 angeschlossen ist.

Der Wasserheizer ist zur Gänze mit einem isolierenden, z.B. aus Schaumstoff bestehenden Mantel 13 ummantelt und vor Wärmeverlusten bewahrt.

Im Abgas führenden Raum 3 kann gemäß der Fig. 1 und 2 eine Metallwendel 14 angeordnet sein, um eine Verwirbelung der Abgase herbeizuführen und dadurch deren Wärmeabgabe und den Wärmetausch zu begünstigen. Zur Verbesserung des Wärmetausches können ferner gemäß der Fig. 3 und 4 an der Innenseite des keramischen Körpers 1 Rippen 15 od.dgl. Vorsprünge vorgesehen sein. Beiderlei Maßnahmen lassen sich im Rahmen der Erfindung auch miteinander kombinieren.

Eine vereinfachte Ausführungsform, dergemäß auf eine metallische Wandung 9 des Ringraumes 4 verzichtet werden kann, ist in der Fig.4 dargestellt. Bei dieser Ausführungsform ist der rohrförmige Wärmetauschkörper 1 selbst von wasserführenden Kanälen 16 durchsetzt und kann überdies gleichfalls an seiner dem Abgas führenden Raum 3 zugewendeten Innenseite mit wärmeübertragenden Rippen 15 versehen sein.

## Patentansprüche

1. Brennerbetriebener Wasserheizer mit einer an die Brennkammer anschließenden länglichen, von einem wasserführenden Raum (4, 16) umgebenen Abgasführung (3), wobei der wasserführende Raum (4, 16) von der Abgasführung (3) durch einen aus keramischem Material bestehenden Wärmetauschkörper (1) getrennt ist, dadurch gekennzeichnet, daß der Wärmetauschkörper (1) die Abgasführung (3) rohrförmig umschließt, wobei der wasserführende Raum entweder als Ringraum (4), der an seiner Außenseite von einer metallischen, über Dichtungen (10) mit dem Wärmetauschkörper (1) verbundenen Wandung (9) begrenzt ist, oder durch den Wärmetauschkörper (1) durchsetzende, vorzugsweise achsparallele Kanäle (16) ausgebildet ist.

2. Wasserheizer nach Anspruch 1, dadurch gekennzeichnet, daß der Wärmetauschkörper (1) zumindest an seiner dem abgasführenden Raum (3) zugewendeten Innenseite eine den Wärmetausch begünstigende Profilierung, zum Beispiel einwärtsragende Rippen (15) oder dergleichen Fortsätze, aufweist (Figuren 3, 4).

3. Wasserheizer nach einem der vorangehenden Ansprüche, gekennzeichnet durch zumindest einen im abgasführenden Raum (3) angeordneten, den Wärmetausch begünstigenden Einbau, zum Beispiel eine Metallwendel (14) (Figuren 1, 2).

4. Wasserheizer nach einem der vorangehenden Ansprüche, gekennzeichnet durch eine isolierende Ummantelung (13) seiner wasserführenden Bereiche (Figuren 1, 4).

5. Wasserheizer mit einem Sturzbrenner und einer Abgasführung (11), von der unterhalb des abgasführenden Raumes (3) eine Kondensatabfuhrleitung (12) ausgeht, nach Anspruch 1, dadurch gekennzeichnet, daß die Abgasführung (11) in der Dichtverbindung (10) zwischen der metallischen Wandung (9) und der Außenseite des Wärmetauschkörpers (1) ansetzt (Figur 1).

## Claims

1. A burner-operated water heater comprising an elongate flue gas passage (3), which succeeds the combustion chamber and is surrounded by a water-conducting space (4, 16), which is separated from the flue gas passage (3) by a heat exchange body (1) made of ceramic material, characterized in that the beat exchange body (1) is tubular and surrounds the flue gas passage (3) and the water-conducting space consists of an annular space (4), which is defined on its outside by a metal wall (9), which is joined by seals (10) to the heat exchange body (1), or the water annular space is constituted by preferably axially parallel passages (16), which extend through the heat exchange body (1).

2. A water heater according to claim 1, characterized in, that the heat exchange body (1) has at least on its inside surface facing the flue gas-conducting space (3) a profile which promotes the heat exchange and is constituted, e.g., by inwardly protruding ribs (15) or the like extensions (Figures 3, 4).

3. A water heater according to any of the preceding claims, characterized by at least one internal fixture, which is arranged in the flue gas-conducting space (3) and promotes the heat exchange, e.g., a metal helix (14) (Figures 1, 2).

4. A water heater according to any of the preceding claims, characterized by an insulating sheath (13) on its water-conducting portions (Figures 1, 4).

5. A water heater comprising a down draught burner and a flue gas passage (11), from which a condensate discharge line (12) extends below the flue gas-conducting space (3), according to claim 1, characterized in that the flue gas passage (11) begins at the sealed joint (10) between the metal wall (9) and the outside surface of the heat exchange body (1) (Figure 1).

## Revendications

1. Chauffe-eau muni d'un brûleur avec une canalisation d'évacuation des fumées (3) plus ou moins longue, raccordée à la chambre de combustion et entourée par une canalisation d'eau (4, 16), ladite canalisation (4, 16) étant séparée de la canalisation d'évacuation (3) par un corps échangeur de chaleur (1) céramique, caractérisé par le fait que le corps échangeur de chaleur (1) enveloppe, sous forme de tube, la canalisation d'évacuation des fumées (3), la canalisation d'eau étant du constituée par un espace annulaire (4) avec une paroi extérieure (9) métallique, assemblée avec le corps échangeur de chaleur (1) au moyen de joints d'étanchéité (10), ou formée par des canaux (16) de préférence parallèles, qui percent le corps échangeur de chaleur (1).

2. Chauffe-eau suivant la revendication 1, caractérisé par le fait que le corps échangeur de chaleur (1) porte au moins à sa face intérieure formant la canalisation d'évacuation (3) des profils favorisant l'échange de chaleur, tels que des nervures (15) ou similaires (Fig. 3, 4).

3. Chauffe-eau suivant l'une des revendications précédantes, caractérisé par au moins un élément favorisant l'échange de chaleur et disposé dans la canalisation d'évacuation (3), par exemple une hélice métallique (14) (Fig. 1, 2).

4. Chauffe-eau suivant l'une des revendications précédantes, caractérisé par une enveloppe isolante (13) entourant les canalisations d'eau (Fig. 1, 4).

5. Chauffe-eau avec un brûleur inversé et une conduite d'évacuation des fumées (11) de laquelle part un tube d'évacuation d'eau de condensation (12), branché sur ladite conduite au-dessous de la canalisation (3), suivant la revendication 1, caractérisé par le fait que la conduite d'évacuation (11) prend naissance au joint d'étanchéité (10) entre la paroi métallique (9) et la face extérieure du corps échangeur de chaleur (1) (Fig. 1).
